**Europäisches Patentamt**

**European Patent Office**

**Office européen des brevets**

(19)

(11) Veröffentlichungsnummer: **0 330 654 B1**

(12) **EUROPÄISCHE PATENTSCHRIFT**

(45) Veröffentlichungstag der Patentschrift :
**09.10.91 Patentblatt 91/41**

(51) Int. Cl.$^5$ : **G01N 27/417**

(21) Anmeldenummer : **87904853.6**

(22) Anmeldetag : **12.08.87**

(86) Internationale Anmeldenummer :
**PCT/DE87/00353**

(87) Internationale Veröffentlichungsnummer :
**WO 88/02859 21.04.88 Gazette 88/09**

(54) **GASSENSOR MIT CERMET-ELEKTRODEN.**

(30) Priorität : **16.10.86 DE 3635157**

(43) Veröffentlichungstag der Anmeldung :
**06.09.89 Patentblatt 89/36**

(45) Bekanntmachung des Hinweises auf die
Patenterteilung :
**09.10.91 Patentblatt 91/41**

(84) Benannte Vertragsstaaten :
**DE FR GB IT SE**

(56) Entgegenhaltungen :
**EP-A- 0 006 989
EP-A- 0 008 430**

(56) Entgegenhaltungen :
**EP-A- 0 020 938
EP-A- 0 062 330
EP-A- 0 070 448
DE-A- 2 852 638
DE-A- 2 852 647
DE-A- 3 118 299**

(73) Patentinhaber : **ROBERT BOSCH GMBH
Postfach 50
W-7000 Stuttgart 1 (DE)**

(72) Erfinder : **FRIESE, Karl-Hermann
Strohgäu Stra e 13
W-7250 Leonberg (DE)**
Erfinder : **WIEDENMANN, Hans-Martin
Brucknerstrasse 20
W-7000 Stuttgart 1 (DE)**

## Beschreibung

### Stand der Technik

Die Erfindung geht aus von einem Gassensor nach der Gattung des Anspruchs 1. Es ist bekannt, zur Herstellung von Gassensoren auf den Festelektrolyten Cermet-Elektroden aufzubringen, wobei der Festelektrolyt im allgemeinen aus teilstabilisiertem Zirkondioxid besteht und die Cermet-Elektroden das gleiche teilstabilisierte Zirkondixoid als Keramikmaterial zur Bildung des Stützgerüstes enthalten. Als Festelektrolyt wird teilstabilisierte $ZrO_2$-Keramik deshalb bevorzugt verwendet, weil es zum einen aufgrund des geringeren Gehaltes an Stabilisatoroxiden preiswerter ist, zum anderen aber auch, weil es eine hohe Biegefestigkeit aufweist, was vor allem bei der Herstellung plättchenförmiger Gassensoren aus dünnen Keramikfolien eine große Rolle spielt. Die hohe Biegefestigkeit kommt dadurch zustande, daß bei der teilstabilisierten $ZrO_2$-Keramik (Kurzbezeichnung PSZ) mit einem hohen Gehalt an metastabilem tetragonalen $ZrO_2$ an der Oberfläche und in den unmittelbar darunterliegenden Bereichen tetragonales $ZrO_2$ zu monoklinem $ZrO_2$ umgewandelt wird und aufgrund des erhöhten Gittervolumens des monoklinen $ZrO_2$ an der Oberfläche Druckspannungen erzeugt werden. Dies gilt in besonderem Maße für teilstabilisiertes Zirkondioxid mit mehr als 50 % tetragonalem $ZrO_2$, dem sogenannten polykristalinen tetragonalen Zirkonoxid (Bezeichnung TZP). Durch eine länger dauernde Behandlung in wasserdampfhaltiger Atmosphäre bei erhöhter Temperatur (ca. 150 - 300 °C) läßt sich dieser Effekt sogar noch verstärken. Nachteilig an diesen Sensoren ist jedoch, daß die Haftfestigkeit der Cermet-Elektroden auf dem Festelektrolyten zu wünschen übrig läßt und es dadurch zu Dauerlaufschäden und damit zum Ausfall derartiger Sonden kommt. Dies gilt auch für Sonden, bei denen der Festelektrolyt zwar aus vollstabilisiertem $ZrO_2$ besteht, bei der Herstellung der Cermet-Elektrode jedoch ein teilstabilisiertes $ZrO_2$ benutzt wurde.

Bekannte Sonden mit teilstabilisiertem $ZrO_2$ als Festelektrolyt und vollstabilisiertem $ZrO_2$ als Stützgerüst der Cermet-Elektroden, wie sie z. B. die DE-OS 28 52 638 beschreibt, zeigen keine besonders gute Haftfestigkeit. Diese Elektrodenkeramik bildet infolge der geringeren Sinteraktivität eine günstige Porenstruktur aus, die die Gasdiffusion zur Elektrode erleichtert, jedoch besitzt sie nicht die erwünschte Haftfestigkeit.

Gemäß der DE-OS 28 52 647 wird auf das Schichtsystem Festelektrolyt-Elektroden eine poröse Deckschicht aufgebracht. Es hat sich herausgestellt, daß bei üblichen Elektroden ohne Deckschicht die Oberflächenschicht nach dem Aufbringen während der weiteren Verarbeitungsschritte zum Koagulieren oder zu Kornwachstum der elektronenleitenden Partikeln neigt, was zu verschlechterter Sauerstoffionenleitfähigkeit und erhöhter Elektrodenpolarisation führt. Dieser Effekt wird durch eine auf der Elektrodenoberfläche aufgebrachte Deckschicht beim Sinterprozess unterdrückt. Gemäß der DE-OS 28 52 647 werden bei den üblichen edelmetallhaltigen Elektroden, z. B. Platin-Elektroden, solche Deckschichten beispielsweise aus $Al_2O_3$ oder $ZrO_2$ oder Mischungen daraus vorgesehen.Diese Maßnahme kann jedoch gleichfalls nicht die Haftfestigkeit des Systems Festelektrolyt-Elektroden verbessern.

### Vorteile der Erfindung

Der erfindungsgemäße Gassensor mit den Merkmalen des Anspruchs 1 hat demgegenüber den Vorteil, daß die Elektroden auf dem Festelektrolyten eine erhöhte und somit ausreichende Haftfestigkeit aufweisen und die Dauerlaufstabilität der Elektroden so groß ist, daß ihre Aktivität und somit die Funktion des Gassensors bei Langzeitbeanspruchung gesichert ist.

Wie sich gezeigt hat, muß in dem Bereich der Schichtgrenzen jedes Vorhandensein metastabiler Modifikationen des $ZrO_2$ vermieden werden, damit sich nicht in diesem Bereich der aneinandergrenzenden Schichten Schwierigkeiten bezüglich der Haftung ergeben.

Hierzu ist bei einem Gassensor, dessen $ZrO_2$-Festelektrolyt metastabile Modifikationen des $ZrO_2$ enthält, auf dem Festelektrolyten eine Schicht aus $ZrO_2$ aufzubringen, das einen Stabilisatorgehalt aufweist, der mindestens zur Bildung eines vollstabilisierten $ZrO_2$ ausreicht, besser noch, einen Stabilisatorgehalt, der über dieser Mindestgrenze liegt. Durch Ausbildung einer solchen Schicht aus mindestens vollstabilisiertem $ZrO_2$ auf eine PSZ-Keramik wird die Ausbildung einer prozeß unterzogen. Das Mahlgut wird sodann in eine Binder/Weichmacher-Lösung eingebracht und die Suspension in der für die Keramikfolientechnik üblichen Weise weiterverarbeitet und auf einer Bandgießanlage zu Keramikfolien von etwa 0,5 mm Dicke verarbeitet. Alternativ kann die Herstellung auch so erfolgen, daß das Mahlgut als wässrige Suspension unter Binderzusatz zu einer rieselfähigen Preßmasse sprühgetrocknet wird. Die Preßmasse wird zu dünnen Substraten von etwa 0,85 mm verpreßt. Anschließend werden die Substrate bei 1000 °C vorgesintert, um ihnen eine ausreichende mechanische Festigkeit zu verleihen.

Die Substrate werden dann mit folgenden Schichten in Siebdrucktechnik belegt:

a) Auftrag einer $ZrO_2$-Schicht mit 10 Mol-% $Y_2O_3$ (oder $Yb_2O_3$), wobei die Pulvermischung aus $ZrO_2$-Pulver, $Y_2O_3$-Pulver oder $Yb_2O_3$-Pulver und 3 Gew.-% Kaolin ($Na_2O$ und $K_2O$ < 0,5 %) besteht. Die Mischung wird in bekannter Weise aufgemahlen, bis keine Agglomerate bzw. Grobkörner > 8 µm mehr enthalten sind. Die daraus hergestellte Siebdruckpaste enthält in bekannter Weise Binder, Weichmacher und Lösungsmittel, die mit dem Bindersystem des Keramiksubstrats verträglich sind.

b) Auftrag einer Pt-Cermetschicht als poröse Elektroden sowie als Leiterbahn zu den Elektroden. Das keramische Stützgerüst des Cermets wird wie folgt aufbereitet: Pulvermischung aus $ZrO_2$-Pulver und 8 Mol.-% $Y_2O_3$-Pulver oder $Yb_2O_3$-Pulver, Aufmahlung in bekannter Weise, bis keine Agglomerate bzw. Grobkörner > 8 µm mehr enthalten sind. - Das eingesetzte, vorzugsweise plättchenförmige Platinpulver entspricht hinsichtlich der Korngrößenverteilung ebenfalls dieser Forderung. Das gemahlene Keramikpulver und das Pt-Pulver werden in üblicher Weise mit einem Dicköl aus Binder, Weichmacher und Lösungsmittel zu einer Siebdruckpaste vereinigt. druckverspannten oberflächennahen Zone verhindert bzw. behindert. Die Biegefestigkeit bleit vergleichbar niedrig wie bei einer vollstabilisierten Keramik.

Durch die in den abiängigen Ansprüchen aufgeführten Maßnahmen sind vorteilhafte Weiterbildungen und Verbesserungen des im Anspruch 1 angegebenen Gassensors möglich. Est ist vorteilhaft, die zur Verbesserung der zur Elektrodenhaftung aufgebrachte mindestens vollstabilisierte Zwischenschicht möglichst nur unter den Elektroden selbst vorzusehen und die restliche Oberfläche des Festelektrolyten freizulassen von der genannten Schicht. Die Zuleitungen zu den Elektroden können ebenso ohne die genannte Schicht aufgebracht werden, wenn sie von einem festen und gut haftenden Deckschichtsystem überzogen sind, was normalerweise der Fall ist.

Besonders vorteilhaft ist die Anwendung der Erfindung bei Gassensoren, die aus Folien aus stabilisierten $ZrO_2$ aufgebaut sind, auf denen die Cermet-Elektroden und Deckschichten sowie gegebenenfalls die Zwischenschichten vorgesehen sind. Um jedoch bei diesen Folien von 0,5 bis höchstens 1 mm Dicke den Sinterverzug zu begrenzen, sind bevorzugt symmetrisch zu den Cermet-Elektroden liegende Flächen mit Zwischen- und/oder Deckschichten belegt.

Beschreibung eines Ausführungsbeispiels

Bei diesem Beispiel geht es zunächst um die Herstellung eines Festelektrolytplättchens aus $Y_2O_3$-stabilisierten Zirkondioxid mit etwa 50 % tetragonalem $ZrO_2$. Auf den einander gegenüberliegenden Großflächen des Plättchens sind zwei poröse Cermet-Elektroden aus 60 Vol.-% Pt und 40 Vol.-% $Y_2O_3$-stabilisiertem $ZrO_2$-Pulver angeordnet. Dieses Element ist Bestandteil eines elektrochemischen Sensors zur Erfassung des Sauerstoffpartialdrucks in Gasen. Die Herstellung erfolgt in dieser Weise: Die Keramik wird aus handelsüblichem kopräzipitierten $ZrO_2$-Pulver mit 5 Mol.-% $Y_2O_3$ (oder aus entsprechend stabilisiertem vorkalzinierten $ZrO_2$-Pulver) mit weitgehend homogener $Y_2O_3$-Verteilung aufbereitet. Zur Erhöhung der Sinteraktivität werden 2 Gew.-% Kaolin ($Na_2O$ und $K_2O$ 0,5 %) zugesetzt. Die Pulvermischung wird in bekannter Weise einem Mahl Nachdem die Zirkondioxidschicht nach a) und die Cermetschicht nach b) übereinander auf das Substrat aufgebracht sind, wobei der nicht von Elektroden bedeckte Teil einer Seite auch nicht mit der Schicht nach a) bedruckt ist, wird der so hergestellte Sensorbaustein mit weiteren Schichten wie Isolationsschichten, Abdeckschichten und Schutzschichten bedruckt, wobei wegen des Sinterverzuges auf eine möglichst symmetrische Belegung geachtet wird, und dann mit anderen bedruckten Substraten in einem Laminierprozeß zu einem kompletten Sensorelement zusammengefügt. Dieses Sensorelement wird schließlich bei 1400 °C in oxidierender Atmosphäre gesintert und liegt dann fertig vor.

**Patentansprüche**

1. Gassensor mit Cermet-Elektroden, mit einem $ZrO_2$-Festelektrolyten, der metastabile Modifikationen des $ZrO_2$ enthält, und der mindestens eine Elektrode trägt, die im wesentlichen aus einem feinteiligen Keramikmaterial zur Bildung eines Stützgerüstes und einem feinteiligen elektronenleitenden Material besteht, wobei das feinteilige Keramikmaterial in einer Form vorliegt, die kein Auftreten von metastabilen Modifikationen während des Herstellens der Elektroden ermöglicht, gekennzeichnet durch eine Zwischenschicht aus $ZrO_2$ auf dem Festelektrolyten, die einen Stabilisatorgehalt aufweist, der mindestens zur Bildung eines vollstabilisierten $ZrO_2$ ausreicht.

2. Gassensor nach Anspruch 1, gekennzeichnet durch einen erhöhten Stabilisatorgehalt des als Schicht auf dem Festelektrolyten dienenden $ZrO_2$.

3. Gassensor nach Anspruch 2, gekennzeichnet durch einen Stabilisatorgehalt des als Schicht auf dem Festelektrolyten dienenden $ZrO_2$ von 10 Mol.-% $Y_2O_3$ und/oder $Yb_2O_3$.

4. Gassensor nach einem der Ansprüche 1 bis 3, dadurch gekennzeichnet, daß das Material zur Bildung der Schicht auf dem Festelektrolyten Stoffe enthält, die die Sinteraktivität erhöhen.

5. Gassensor nach Anspruch 4, gekennzeichnet durch einen Gehalt an 3 Gew.-% Kaolin in dem Material zur Bildung der genannten Schicht.

6. Gassensor nach einem der Ansprüche 1 bis 3, dadurch gekennzeichnet, daß die Schicht auf dem Festelektrolyten nur zwischen dem Festelektrolyten und den Cermet-Elektroden vorgesehen ist.

7. Gassensor nach einem der vorhergehenden Ansprüche, dadurch gekennzeichnet, daß über den Elektroden sowie deren Zuleitungen in Form von Leiterbahnen Deckschichten vorgesehen sind.

8. Gassensor nach Anspruch 7, dadurch gekennzeichnet, daß die Deckschicht über den Elektroden porös und über den Leiterbahnen gasdicht ist.

9. Gassensor nach einem der vorhergehenden Ansprüche, dadurch gekennzeichnet, daß er aus Folien aus stabilisiertem ZrO₂ aufgebaut ist, auf denen die Cermet-Elektroden und Deckschichten sowie gegebenenfalls die Zwischenschichten vorgesehen sind.

10. Gassensor nach Anspruch 9, dadurch gekennzeichnet, daß zur Begrenzung eines Sinterverzuges symmetrisch zu den Cermet-Elektroden liegende Flächen mit Zwischen- und/oder Deckschichten belegt sind.

## Claims

1. Gas sensor having cermet electrodes, having a ZrO₂ solid electrolyte which contains metastable modifications of the ZrO₂ and which carries at least one electrode which essentially consists of a finely divided ceramic material to form a supporting framework and a finely divided electron-conducting material, the finely divided ceramic material being in a form which does not make possible any appearance of metastable modifications during the production of the electrodes, characterised by an intermediate layer of ZrO₂ on the solid electrolyte which has a stabiliser content which is at least adequate to form a fully stabilised ZrO₂.

2. Gas sensor according to Claim 1, characterised by an increased stabiliser content of the ZrO₂ functioning as layer on the solid electrolyte.

3. Gas sensor according to Claim 2, characterised by a stabiliser content of the ZrO₂ functioning as layer on the solid electrolyte of 10 mol % of Y₂O₃ and/or Yb₂O₃.

4. Gas sensor according to any of Claims 1 to 3, characterised in that the material for forming the layer on the solid electrolyte contains substances which increase the sintering activity.

5. Gas sensor according to Claim 4, characterised by a content of 3 % by weight of kaolin in the material for forming the said layer.

6. Gas sensor according to any of Claims 1 to 3, characterised in that the layer on the solid electrolyte is provided only between the solid electrolyte and the cermet electrodes.

7. Gas sensor according to any of the preceding claims, characterised in that covering layers are provided above the electrodes and also their leads in the form of conductor tracks.

8. Gas sensor according to Claim 7, characterised in that the covering layer is porous above the electrodes and gas-tight above the conductor tracks.

9. Gas sensor according to any of the preceding claims, characterised in that it is built up from sheets of stabilised ZrO₂ on which the cermet electrodes and covering layers and optionally the intermediate layers are provided.

10. Gas sensor according to Claim 9, characterised in that, to limit a sintering distortion, areas situated symmetrically with respect to the cermet electrodes are coated with intermediate and/or covering layers.

## Revendications

1. Détecteur de gaz à électrodes en cermet, avec un électrolyte solide ZrO₂, qui contient des modifications métastables du ZrO₂, et qui porte au moins une électrode, qui consiste essentiellement en un matériau céramique finement divisé pour former une armature d'appui et en un matériau finement divisé conduisant les électrons, le matériau céramique finement divisé se présentant sous une forme quine permet aucune survenance de modifications métastables pendant la fabrication des électrodes, détecteur caractérisé par une couche intermédiaire en ZrO₂ sur l'électrolyte solide, qui présente une teneur en agent stabilisateur, qui suffit au moins à la formation d'un ZrO₂ complètement stabilisé.

2. Détecteur de gaz selon la revendication 1, caractérisé par une teneur accrue en agent de stabilisation du ZrO₂ servant de couche sur l'électrolyte solide.

3. Détecteur de gaz selon la revendication 2, caractérisé par une teneur en agent de stabilisation de ZrO₂ servant de couche sur l'électrolyte solide de 10 Mol en % d'Y₂O₃ et/ou d'Yb₂O₃.

4. Détecteur de gaz selon les revendications 1 à 3, caractérisé en ce que le matériau servant à la formation de la couche sur l'électrolyte solide contient des matières qui augmentent l'activité de frittage.

5. Détecteur de gaz selon la revendication 4, caractérisé par une teneur de 3% en poids de kaolin dans le matériau servant à la formation de la couche décrite.

6. Détecteur de gaz selon l'une des revendications 1 à 3, caractérisé en ce que la couche sur l'électrolyte solide n'est prévue qu'entre l'électrolyte solide et les électrodes en cermet.

7. Détecteur de gaz selon l'une des revendications précédentes, caractérisé en ce que sur les électrodes comme sur leurs amenées en forme de ruban conducteur, il est prévu des couches de revêtement.

8. Détecteur de gaz selon la revendication 7, caractérisé en ce que la couche de revêtement est poreuse sur les électrodes et étanche aux gaz sur les amenées conductrices.

9. Détecteur de gaz selon l'une des revendications précédentes, caractérisé en ce qu'il est formé de feuilles de $ZrO_2$ stabilisé, sur lesquelles sont prévues les électrodes en cermet et les couches de revêtement ainsi que le cas échéant les couches intermédiaires.

10. Détecteur de gaz selon la revendication 9, caractérisé en ce que pour limiter un retard de frittage de faces disposées symmétriquement par rapport aux électrodes en cermet sont recouvertes par des couches intermédiaires et/ou des couches de revêtement.